# EUROPÄISCHE PATENTSCHRIFT

(11) **EP 2 836 564 B1**
(45) Veröffentlichungstag und Bekanntmachung des Hinweises auf die Patenterteilung: **02.11.2016**
(21) Anmeldenummer: 13714919.1
(22) Anmeldetag: 08.04.2013
(51) Int. Cl.: C01D 7/00, C01D 9/00, C09K 5/12

(54) **ALKALIMETALLCARBONAT-HALTIGE NITRATSALZZUSAMMENSETZUNGEN UND DEREN VERWENDUNG ALS WÄRMETRÄGERMEDIUM ODER WÄRMESPEICHERMEDIUM**
ALKALI-METAL-CARBONATE-CONTAINING NITRATE SALT COMPOSITIONS AND USE THEREOF AS HEAT TRANSFER MEDIUM OR HEAT STORAGE MEDIUM
COMPOSITIONS DE SELS DE NITRATE CONTENANT DU CARBONATE DE MÉTAL ALCALIN ET LEUR UTILISATION COMME FLUIDE CALOPORTEUR OU FLUIDE ACCUMULATEUR DE CHALEUR

(30) Priorität: 10.04.2012 EP 12163583
(43) Veröffentlichungstag der Anmeldung: 18.02.2015
(73) Patentinhaber: BASF SE, 67056 Ludwigshafen am Rhein (DE)
(72) Erfinder: WORTMANN, Jürgen, 67117 Limburgerhof (DE); LUTZ, Michael, 67346 Speyer (DE); TER MAAT, Johan, 68163 Mannheim (DE); SCHIERLE-ARNDT, Kerstin, 64673 Zwingenberg (DE); MAURER, Stephan, 67435 Neustadt-Gimmeldingen (DE); LADENBERGER, Michael, 76848 Darstein (DE); GEYER, Karolin, 68163 Mannheim (DE); GARLICHS, Florian, 67435 Neustadt (DE)
(74) Vertreter: BASF IP Association
(86) Internationale Anmeldenummer: PCT/EP2013/057282
(87) Internationale Veröffentlichungsnummer: WO 2013/153017

(56) Entgegenhaltungen:
- EP-A1- 1 043 381
- US-A- 3 719 225
- US-A- 4 421 662
- US-A- 4 559 993
- US-A1- 2011 162 829
- US-A1- 2012 056 125

## Beschreibung

Die vorliegende Erfindung betrifft Nitratsalzzusammensetzungen, wie in den Ansprüchen definiert, sowie deren Verwendung als Wärmeträgermedium und/oder Wärmespeichermedium wie ebenfalls in den Ansprüchen definiert.

Sowohl in der chemischen Technologie als auch in der Kraftwerkstechnik sind Wärmeträgermedien oder Wärmespeichermedien auf Basis anorganischer Feststoffe, insbesondere Salzen, bekannt. Sie werden in der Regel bei hohen Temperaturen, beispielsweise jenseits von 100 °C, ergo jenseits des Siedepunktes von Wasser bei Normaldruck, eingesetzt.

Beispielsweise werden in Chemieanlagen zur großtechnischen Herstellung diverser Chemikalien sogenannte Salzbadreaktoren bei Temperaturen von ca. 200 bis 500 °C eingesetzt.

Wärmeträgermedien sind Medien, die von einer Wärmequelle, beispielsweise der Sonne in solarthermischen Kraftwerken, erwärmt werden und die in ihnen enthaltene Wärmemenge über eine bestimmte Strecke transportieren. Sie können dann diese Wärme auf ein anderes Medium, beispielsweise Wasser oder ein Gas, vorzugsweise über Wärmeüberträger, übertragen, wobei dieses andere Medium dann beispielsweise eine Turbine antreiben kann. Wärmeträgermedien können aber auch die in ihnen enthaltene Wärmemenge auf ein anderes, sich in einem Vorratsbehälter befindliches Medium (beispielsweise Salzschmelze) übertragen und so die Wärme zur Speicherung weitergeben. Wärmeträgermedien können aber auch selbst in einen Vorratsbehälter eingespeist werden und dort verbleiben. Sie sind dann selbst sowohl Wärmeträgermedien als auch Wärmespeichermedien.

Wärmespeicher enthalten Wärmespeichermedien, üblicherweise stoffliche Zusammensetzungen, beispielsweise die erfindungsgemäßen Mischungen, die eine Wärmemenge über eine gewisse Zeit speichern können. Wärmespeicher für fluide, vorzugsweise flüssige, Wärmespeichermedien werden üblicherweise durch einen festen, vorzugsweise gegen Wärmeverlust isolierten, Behälter ausgebildet.

Ein noch relativ junges Anwendungsgebiet von Wärmeträgermedien oder Wärmespeichermedien sind solarthermische Kraftwerke zur Erzeugung elektrischer Energie. In diesen heizt gebündelte Sonnenstrahlung ein Wärmeträgermedium auf, das seine Wärme über einen Wärmeüberträger (auch als "Wärmetauscher" bezichnet) an Wasser abgibt, somit Dampf erzeugt, der eine Turbine antreibt, die schließlich, wie in einem konventionellen Elektrizitätskraftwerk, einen Generator zur Erzeugung von elektrischer Energie antreibt.

Drei Typen von Solarthermischen Kraftwerken sind besonders wichtig:
Das Parabolrinnenkraftwerk, das Fresnel-Kraftwerk und das Turmkraftwerk.

Im Parabolrinnenkraftwerk wird die Sonnenstrahlung via parabolisch geformter Spiegelrinnen in die Brennlinie der Spiegel fokussiert. Dort befindet sich ein Rohr, das mit einem Wärmeträgermedium gefüllt ist. Das Wärmeträgermedium wird durch die Sonnenstrahlung aufgeheizt und strömt zum Wärmeüberträger, wo es seine Wärme, wie oben beschrieben, zur Dampferzeugung abgibt.

Im Fresnel-Kraftwerk wird die Sonnenstrahlung mit in der Regel flachen Spiegeln in eine Brennlinie fokussiert. Dort befindet sich ein Rohr, das von einem Wärmeträgermedium durchströmt ist. Im Gegensatz zum Parabolrinnenkraftwerk werden der Spiegel und das Rohr nicht gemeinsam dem Sonnenstand nachgeführt, sondern die Stellung der Spiegel wird relativ zum fest verlegten Rohr verstellt. Die Spiegelstellung folgt der Position der Sonne so, dass die feste Rohrleitung immer in der Brennlinie der Spiegel liegt. Auch in Fresnel-Kraftwerken kann geschmolzenes Salz als Wärmeträger eingesetzt werden. Salz-Fresnel-Kraftwerke befinden sich derzeit weitgehend noch in der Entwicklung. Die Dampferzeugung beim Salz-Fresnelkraftwerk erfolgt analog zum Parabolrinnenkraftwerk.

Beim solarthermischen Turmkraftwerk ist ein Turm von Spiegeln umringt, die die Sonnenstrahlung auf einen sogenannten zentralen Receiver im oberen Teil des Turms gebündelt abstrahlen. Im Receiver wird ein Wärmeträgermedium erhitzt, das analog zum Parabolrinnenkraftwerk oder Fresnel-Kraftwerk via Wärmeüberträger Dampf zur Erzeugung elektrischer Energie produziert.

Im Parabolrinnenkraftwerk wird derzeit ein organisches Wärmeträgermedium aus Diphenylether und Diphenyl, auch als "Thermoöl" bezeichnet, verwendet. Dieses kann aber nur bis 400 °C eingesetzt werden, da es sich bei längerem Betrieb oberhalb dieses Bereichs zersetzt.

Es ist allerdings wünschenswert die Temperatur des Wärmeträgermediums bei Ankunft im Wärmeüberträger des Dampferzeugers (sogenannte Dampfeingangstemperatur) auf über 400 °C zu erhöhen, da sich dann der Wirkungsgrad der Dampfturbine erhöht (bei 400 °C Dampfeingangstemperatur ist der Carnot-Wirkungsgrad ca. 42%; er steigt zum Beispiel bei 500 °C auf über ca. 50%).

Wird, wie bereits in solarthermischen Turmkraftwerken verwirklicht, anstatt des genannten organischen Wärmeträgermediums eine Mischung von ca. 60 Gew.-% Natriumnitrat (NaNO₃) und ca. 40 Gew.-% Kaliumnitrat (KNO₃) als Wärmeträgermedium verwendet, so kann dieses bis auf maximal ca. 565 °C dauerhaft erhitzt werden. Oberhalb dieser Temperatur zersetzt sich auch das genannte Nitratgemisch mit der Zeit in der Regel unter Freisetzung von Stickstoffoxiden, üblicherweise Stickstoffmonoxid und/oder Stickstoffdioxid.

Es wäre in solarthermischen Kraftwerken durchaus technisch möglich, die Wärmeträgermedien prinzipiell auf Temperaturen um 650 °C, zum Beispiel im Fokus eines Turmkraftwerks, zu erhitzen und somit höhere Wirkungsgrade der Dampfturbine, ähnlich jenen fossil befeuerter Kraftwerke, zu erreichen.

Es ist somit wünschenswert, die thermische Beständigkeit von Wärmeträgermedien im Dauerbetrieb auf mehr als ca. 565 °C zu erhöhen.

Sehr wünschenswert ist es, die Erzeugung elektrischer Energie in einem solarthermischen Kraftwerk, egal welchen Typs, an den Netzbedarf anzupassen. Dies wird beispielsweise dadurch ermöglicht, dass während Zeiten hoher Sonneneinstrahlung Wärme gespeichert wird, die bei Bedarf nach Sonnenuntergang oder während Schlechtwetterphasen zur Erzeugung von elektrischer Energie genutzt werden kann.

Die Speicherung von Wärme kann direkt durch Lagerung des erhitzten Wärmeträgermediums in in der Regel gut isolierten Vorratstanks erfolgen oder indirekt durch Übertragung der Wärme vom erhitzten Wärmeträgermedium auf ein anderes Medium (Wärmespeicher), beispielsweise einer Natriumnitrat-Kaliumnitrat-Salzschmelze.

Eine indirekte Methode ist im 50 MW Kraftwerk Andasol I in Spanien realisiert, wobei hier ca. 28.500 t einer Schmelze von Natriumnitrat und Kaliumnitrat (60:40 in Gew.-%) als Wärmespeicher in einem gut isolierten Tank verwendet werden. Die Schmelze wird während der Sonneneinstrahlungszeiten von einem kälteren Tank (ca. 290 °C) über einen Thermoöl-Salz-Wärmeüberträger in einen heißeren Tank gepumpt und dabei auf etwa 390 °C aufgeheizt. Dabei wird über einen Wärmeüberträger dem Thermoöl (hier als Wärmeträgrmedium fungierend) Wärmeenergie entzogen und in die Salzschmelze eingespeist (Thermoöl-Salz-Wärmeüberträger). In Zeiten niedriger Sonneneinstrahlung und nachts kann das Kraftwerk bei voll aufgeladenem Wärmespeicher etwa 7.5 h unter Volllast gefahren werden.

Es wäre allerdings von Vorteil, das Wärmeträgermedium auch als Wärmespeichermedium zu verwenden, da so die entsprechenden Thermoöl-Salz-Wärmeüberträger eingespart werden könnten.

Außerdem könnte auf diese Weise ein möglicher Kontakt des Thermoöls, das reduzierende Eigenschaften besitzt, mit der stark oxidierend wirkenden Nitratschmelze vermieden werden. Auf Grund des deutlich höheren Preises des Thermoöls im Vergleich zur Natriumnitrat-Kaliumnitrat-Schmelze wurde Thermoöl bisher als Wärmespeicher nicht in Betracht gezogen. US 4,559,993 beschreibt einen Prozess zur Stabilisierung von geschmolzenen Alkalimetallnitraten bzw. -nitriten durch Zusatz von Alkalimetallhydroxiden.

Die Aufgabe der Erfindung ist, die Bereitstellung einer gut verfügbaren, verbesserten Nitratsalzzusammensetzung als Wärmeträgermedium und/oder Wärmespeichermedium, welche bei erhöhter Temperatur, vorzugsweise mehr als 565 °C, im Dauerbetrieb eingesetzt werden kann, wobei die Freisetzung von Stickstoffoxiden, üblicherweise Stickstoffmonoxid und/oder Stickstoffdioxid vermindert oder unterdrückt wird.

Ein Nitratgemisch aus ca. 60 Gew.-% Natriumnitrat (NaNO₃) und ca. 40 Gew.-% Kaliumnitrat (KNO₃) wird beispielsweise von der Firma Coastal Chemical Co., L.L.C. unter dem Namen Hitec® Solar Salt angeboten. Dieses Produkt wird zur Verwendung als Wärmeträger- oder Wärmespeichermedium angeboten. Es kann, neben weiteren Komponenten, in geringen Mengen bis zu maximal 0,15 Gew % Natriumcarbonat (Na₂CO₃) enthalten (Produktinformationsblatt Hitec® Solar Salt).

Aus Rationalitätsgründen werden die in der Beschreibung und in den Ansprüchen definierten Nitratsalzzusammensetzungen, insbesondere ihre bevorzugten und besonders bevorzugten Ausführungsformen, im folgenden auch "erfindungsgemäße Nitratsalzzusammensetzung" genannt.

Die erfindungsgemäße Nitratsalzzusammensetzung enthält als wesentliche Bestandteile A) ein Alkalimetallnitrat und ein Alkalimetallnitrit.

Das Alkalimetallnitrat ist hierin ein Nitrat, vorzugsweise praktisch wasserfreies, besonders bevorzugt kristallwasserfreies, Nitrat der Metalle Lithium, Natrium, Kalium, Rubidium oder Cäsium, allgemein als MetNO₃ beschrieben, wobei Met die voran beschriebenen Alkalimetalle bedeutet, wobei der Begriff Alkalimetallnitrat sowohl ein einzelnes Nitrat als auch Mischungen aus den Nitraten dieser Metalle einschließt, beispielsweise Kaliumnitrat plus Natriumnitrat.

Das Alkalimetallnitrit ist hierin ein Nitrit, vorzugsweise praktisch wasserfreies, besonders bevorzugt kristallwasserfreies, Nitrit der Alkalimetalle Lithium, Natrium, Kalium, Rubidium und Cäsium, allgemein als MetNO₂ beschrieben, wobei Met die voran beschriebenen Alkalimetalle bedeutet. Das Alkalimetallnitrit kann als einzelne Verbindung aber auch als Gemisch verschiedener Alkalimetallnitrite, beispielsweise Natriumnitrit plus Kaliumnitrit, vorliegen.

Der Bestandteil A) liegt in einer Gesamtmenge im Bereich von 98 bis 99,84 Gew.-%, bezogen auf die erfindungsgemäße Nitratsalzzusammensetzung vor.

Der Bestandteil A) enthältein Alkalimetallnitrit, wie oben beschrieben, gut geeignet in einer Menge im Bereich bis 50 Gew.-%, vorzugsweise im Bereich von 1 bis 10 Gew.-%, besonders bevorzugt im Bereich von 2 bis 5 Gew.-% enthalten, jeweils bezogen auf den Bestandteil A).

Eine gut geeignete Alkalimetallnitratkomponente MetNO₃ des Bestandteils A) setzt sich beispielsweise zusammen aus
A1) Kaliumnitrat in einer Menge im Bereich von 20 bis 55 Gew.-%,
A2) Natriumnitrat in einer Menge im Bereich von 45 bis 80 Gew.-%, jeweils bezogen auf die Alkalimetallnitratkomponente MetNO₃ des Bestanteils A).

Eine gut geeignete Alkalimetallnitritkomponente MetNO₂ des Bestandteils A) setzt sich beispielsweise zusammen aus
A1) Kaliumnitrit in einer Menge im Bereich von 20 bis 55 Gew.-%,
A2) Natriumnitrit in einer Menge im Bereich von 45 bis 80 Gew.-%, jeweils bezogen auf die Alkalimetallnitritkomponente MetNO₂ des Bestanteils A).

In einer weiteren Ausführungsform der Nitratsalzzusammensetzung enthält der Bestandteil A) nur eine Sorte eines Alkalimetallnitrats, beispielsweise Kaliumnitrat oder Natriumnitrat.

Die erfindungsgemäße Nitratsalzzusammensetzung enthält weiterhin als wesentlichen Bestandteil B) eine Alkalimetallverbindung ausgewählt aus der Gruppe B1) Alkalimetalloxid Met₂O, in welchem Met Lithium, Natrium, Kalium, Rubidium, Cäsium, vorzugsweise Natrium und/oder Kalium bedeuten, B2) Alkalimetallcarbonat, B3) Alkalimetallverbindung, die im Temperaturbereich von 250°C bis 600°C zu Alkalimetalloxid oder Alkalimetallcarbonat zerfällt, B5) Alkalimetallperoxid Met₂O₂, in welchem Met Lithium, Natrium, Kalium, Rubidium, Cäsium, vorzugsweise Natrium und/oder Kalium bedeuten und B6) Alkalimetallsuperoxid MetO₂, in welchem Met Natrium, Kalium, Rubidium, Cäsium, vorzugsweise Natrium und/oder Kalium bedeuten, in einer Gesamtmenge im Bereich von 0,16 bis 2 Gew.-%, jeweils bezogen auf die Nitratsalzzusammensetzung.

Bevorzugt sind Alkalimetallverbindungen B3), die bei den typischen hohen Betriebstemperaturen von Nitratsalzschmelzen in einem Solarthermiekraftwerk, also bei 250° bis 600 °C, vorzugsweise 300°C bis 500°C und den entsprechenden oxidierenden Bedingungen zu Alkalimetalloxid, vorzugsweise Natriumoxid bzw. zu Alkalimetallcarbonat, vorzugsweise Natriumcarbonat, zerfallen. Beispiele für derartige Alkalimetallverbindungen sind Alkalimetallsalze wie Lithium-, Natrium-, Kalium-, Rubidium-oder Cäsiumsalze von Carbonsäuren wie Ameisensäure, Essigsäure, Oxalsäure, beispielsweise Natriumformiat, Natriumacetat, Kaliumoxalat.

Die erfindungsgemäße Nitratsalzzusammensetzung enthält als bevorzugte wesentliche Bestandteile B) ein Alkalimetallcarbonat in einer Gesamtmenge im Bereich von 0,16 bis 2 Gew.-%, jeweils bezogen auf die Nitratsalzzusammensetzung.

Das Alkalimetallcarbonat ist ein Carbonat, vorzugsweise praktisch wasserfreies Carbonat, der Alkalimetalle Lithium, Natrium, Kalium, Rubidium und Cäsium, allgemein als Met₂CO₃ beschrieben, wobei Met die voran beschriebenen Alkalimetalle bedeutet. Das Alkalimetallcarbonat kann als einzelne Verbindung aber auch als Gemisch verschiedener Alkalimetallcarbonate, beispielsweise Natriumcarbonat plus Kaliumcarbonat, vorliegen.

In einer gut geeigneten Ausführungsform der Nitratsalzzusammensetzung wird der Bestandteil B) praktisch ausschließlich aus Alkalimetallcarbonat Met₂CO₃ gebildet, vorzugsweise aus Natriumcarbonat Na₂CO₃ alleine oder in Begleitung von weiteren Alkalimetallcarbonaten ausgewählt aus der Gruppe bestehend aus Lithiumcarbonat Li₂CO₃, Kaliumcarbonat K₂CO₃, Rubidiumcarbonat Rb₂CO₃, Cäsiumcarbonat Cs₂CO₃, vorzugsweise Lithiumcarbonat Li₂CO₃ und/oder Kaliumcarbonat K₂CO₃.

Der Gehalt der erfindungsgemäßen Nitratsalzzusammensetzung an Bestandteil B), vorzugsweise Alkalimetallcarbonat, insbesondere Natriumcarbonat, sollte nach derzeitigem Kenntnisstand 0,16 Gew.-%, vorzugsweise 0,2 Gew.-% nicht unterschreiten, da sonst die stabilisierende Wirkung des Bestandteils B), vorzugsweise des Alkalimetallcarbonats, verloren geht.

Der Gehalt der erfindungsgemäßen Nitratsalzzusammensetzung an Bestandteil B), vorzugsweise Alkalimetallcarbonat, insbesondere Natriumcarbonat, sollte 2 Gew.-% nicht übersteigen.

Bei höheren Gehalten an Bestandteil B), vorzugsweise Alkalimetallcarbonat, besteht das Risiko, dass Partikel des Bestandteils B), vorzugsweise Alkalimetallcarbonatpartikel, welche beispielsweise zu groß sind und/oder nicht in der Schmelze der erfindungsgemäßen Nitratsalzzusammensetzung gelöst sind, Anlass zu Störungen im Leitungs-, Pumpen- und Apparatesystem des solarthermischen Kraftwerks bzw. der Chemieanlage geben können.

Die obere Grenze des Gehaltes an Bestandteil B), vorzugsweise des Alkalimetallcarbonatgehaltes, der erfindungsgemäßen Nitratsalzzusammensetzung kann durch diverse Parameter beeinflusst werden, beispielsweise der Temperatur einer entsprechenden Schmelze der erfindungsgemäßen Nitratsalzzusammensetzung oder deren genaue Zusammensetzung.

Neben den genannten wesentlichen Komponenten kann die erfindungsgemäße Nitratsalzzusammensetzung noch Spuren von Verunreinigungen, beispielsweise Natriumchlorid, Natriumsulfat, Calciumoxid, Magnesiumoxid, Siliziumdioxid, Aluminiumoxid, Eisenoxid oder Wasser enthalten. Die Summe dieser Verunreinigungen beträgt in der Regel nicht mehr als 1 Gew.-%, bezogen auf die erfindungsgemäße Nitratsalzzusammensetzung.

Die Summe aller Bestandteile der erfindungsgemäßen Nitratsalzzusammensetzung ist 100 Gew.-%.

Die erfindungsgemäße Nitratsalzzusammensetzung geht bei einer Temperatur oberhalb ca. 150 bis 300 °C, unter anderem abhängig vom Nitritgehalt und dem Verhältnis der den Bestandteil A) und/oder B) bildenden Kationen, in die geschmolzene und üblicherweise pumpbare Form über.

Die erfindungsgemäße Nitratsalzzusammensetzung, vorzugsweise in geschmolzener Form, beispielsweise als pumpbare Flüssigkeit, findet Verwendung als Wärmeträgermedium und/oder Wärmespeichermedium, vorzugsweise in Kraftwerken zur Erzeugung von Wärme und/oder Elektrizität, in der chemischen Verfahrenstechnik, beispielsweise in Salzbadreaktoren und in Metallhärteanlagen.

Beispiele für Kraftwerke zur Erzeugung von Wärme und/oder elektrischer Energie sind solarthermische Kraftwerke wie Parabolrinnenkraftwerke, Fresnel-Kraftwerke, Turmkraftwerke.

In einer gut geeigneten Ausführungsform werden die erfindungsgemäßen Nitratsalzzusammensetzungen, vorzugsweise im geschmolzenen Zustand, beispielsweise als pumpbare Flüssigkeit, sowohl als Wärmeträgermedium als auch als Wärmespeichermedium in den solarthermischen Kraftwerken, beispielsweise den Parabolrinnenkraftwerken, den Turmkraftwerken oder den Fresnel-Kraftwerken verwendet.

In einer weiteren gut geeigneten Ausführungsform werden die erfindungsgemäßen Nitratsalzzusammensetzungen, vorzugsweise im geschmolzenen Zustand, beispielsweise als pumpbare Flüssigkeit, entweder als Wärmeträgermedium oder als Wärmespeichermedium in den solarthermischen Kraftwerken, beispielsweise den Parabolrinnenkraftwerken, den Turmkraftwerken, den Fresnel-Kraftwerken verwendet.

Beispielsweise werden die erfindungsgemäßen Nitratsalzzusammensetzungen, vorzugsweise im geschmolzenen Zustand, beispielsweise als pumpbare Flüssigkeit, in Turmkraftwerken als Wärmeträgermedium und/oder als Wärmespeichermedium, besonders bevorzugt als Wärmeträgermedium, verwendet.

Bei der Verwendung der erfindungsgemäßen Nitratsalzzusammensetzungen, vorzugsweise im geschmolzenen Zustand, beispielsweise als pumpbare Flüssigkeit, als Wärmeträgermedium in den solarthermischen Kraftwerken, beispielsweise den Parabolrinnenkraftwerken, den Turmkraftwerken, den Fresnel-Kraftwerken, werden die Wärmeträgermedien durch solar erhitzte Rohre geführt. Dabei führen sie die dort entstehende Wärme üblicherweise zu einem Wärmespeicher oder zum Wärmeüberträger des Dampferhitzers eines Kraftwerkes.

Der Wärmespeicher besteht in der Regel aus zwei großen Behältern, in der Regeleinem kalten und einem heißen Behälter. Die erfindungsgemäße Nitratsalzzusammensetzung, vorzugsweise im geschmolzenen Zustand, beispielsweise als pumpbare Flüssigkeit, wird üblicherweise dem kalten Behälter der Solaranlage entnommen und im Solarfeld einer Parabolrinnenanlage oder einem Turmreceiver erhitzt. Die so erhitzte heiße geschmolzene Salzmischung wird üblicherweise in den heißen Behälter geführt und dort so lange aufbewahrt, bis Bedarf zur Produktion elektrischer Energie besteht.

Dann wird die heiße erfindungsgemäßen Nitratsalzzusammensetzungen im geschmolzenen Zustand, beispielsweise als pumpbare Flüssigkeit, üblicherweise dem heißen Tank entnommen und zum Dampferzeuger eines Dampfkraftwerkes gepumpt. Der dort erzeugte, auf über 100 bar gespannte Dampf treibt in der Regel eine Turbine und einen Generator an der elektrische Energie an das Elektrizitätsnetz abgibt.

Am Dampferzeuger wird die erfindungsgemäßen Nitratsalzzusammensetzungen im geschmolzenen Zustand, beispielsweise als pumpbare Flüssigkeit, in der Regel auf ca. 290°C abgekühlt und üblicherweise zurück in den kalten Tank geführt. Beim Übertragen von Wärme von den solar erhitzten Rohren zum Speicher oder zum Dampferzeuger arbeitet die erfindungsgemäße Nitratsalzzusammensetzung in geschmolzener Form als Wärmeüberträger. Eingefüllt in den Wärmespeicherbehälter arbeitet dieselbe erfindungsgemäße Nitratsalzzusammensetzung als Wärmespeichermedium, um beispielsweise bedarfsgeführte Produktion elektrischer Energie zu ermöglichen.

Die erfindungsgemäße Nitratsalzzusammensetzung, vorzugsweise in geschmolzener Form, findet aber auch Verwendung, als Wärmeträgermedium und/oder Wärmespeichermedium, vorzugsweise Wärmeträgermedium, in der chemischen Verfahrenstechnik, beispielsweise zur Beheizung von Reaktionsapparaturen chemischer Produktionsanlagen wo in der Regel ein sehr hoher Wärmestrom bei sehr hohen Temperaturen mit engen Schwankungsbreiten übertragen werden muss. Beispiele hierfür sind Salzbadreaktoren. Beispiele für die genannten Produktionsanlagen sind Acrylsäureanlagen oder Anlagen zur Herstellung von Melamin.

### Beispiele

### Beispiel 1

500 g Solar Salt (300 g NaNO₃, 200 g KNO₃) wurden mit 5 g Natriumcarbonat (entspricht 0,11 Masse-% Kohlenstoff) versetzt und in einem Edelstahlbehälter auf 300 °C erhitzt. Anschließend wurden während einer Stunde 6 g NO, vermischt mit 5 I wasser- und kohlendioxidfreier Luft, in die Schmelze eingeleitet. Die Analyse der Schmelze nach Versuchsende ergab einen Gesamtkohlenstoffgehalt von 0,031 Masse-%. In diesem Versuch konnten durch Umwandlung des Carbonats 2 g NO-Äquivalente gebunden werden.
Das Nitrat-/Nitritverhältnis (in Gew.-%) hatte sich praktisch nicht geändert, wie naßchemisch durch Analytik der entsprechenden Ionen nachgewiesen wurde.

### Beispiel 2

500 g HITEC® (35 g NaNO₃, 265 g KNO₃, 200 g NaNO₂) wurden mit 5 g Natriumcarbonat (entspricht 0,11 Masse-% Kohlenstoff) versetzt und in einem Edelstahlbehälter auf 300 °C erhitzt. Anschließend wurden während zwei Stunden 15,2 g NO, vermischt mit 10 l wasser- und kohlendioxidfreier Luft, in die Schmelze eingeleitet. Das ursprünglich unlösliche Natriumcarbonat war nach dem Versuch vollständig aufgelöst. Die Analyse der Schmelze ergab einen Gesamtkohlenstoffgehalt von 0,02 Masse-%. In diesem Versuch konnten durch Umwandlung des Carbonats 2,3 g NO-Äquivalente gebunden werden.
Das Nitrat-/Nitritverhältnis (in Gew.-%) hatte sich praktisch nicht geändert, wie naßchemisch durch Analytik der entsprechenden Ionen nachgewiesen wurde.

### Beispiel 3

500 g Solar Salt (300 g NaNO₃, 200 g KNO₃) wurden mit 5 g Na₂O/Na₂O₂ (80:20) versetzt und in einem Edelstahlbehälter auf 400 °C erhitzt. Anschließend wurden während einer Stunde 10,4 g NO, vermischt mit 5 I wasser- und kohlendioxidfreier Luft, in die Schmelze eingeleitet. Der Hydroxidgehalt der Salzschmelze lag nach Hydrolyse unter der Nachweisgrenze (< 0,1 g/100 g). In diesem Versuch konnten somit durch Umwandlung des Oxids 4,6 g NO-Äquivalente gebunden werden.
Das Nitrat-/Nitritverhältnis (in Gew.-%) hatte sich praktisch nicht geändert, wie naßchemisch durch Analytik der entsprechenden Ionen nachgewiesen wurde.

Die Beispiele 1 bis 3 zeigen, dass die erfindungemäßen Alkalimetallverbindungen B) bei hohen Temperaturen Stickstoffoxide binden ohne dass sich das Nitrat-/Nitritverhältnis ändert.

### Beispiel 4

Vergleichsversuch ohne erfindungsgeemäße Alkalimetallverbindungen B) 100 g HITEC® (7 g NaNO₃, 53 g KNO₃, 40 g NaNO₂) wurden in einem Edelstahlrohr auf 595 °C erhitzt und 2,5 Stunden bei dieser Temperatur (± 5 K) gehalten. Die Schmelze wurde mit 10 l/h Argon überströmt, um die gebildeten Gase in zwei Waschflaschen zu überführen. Die beiden Waschflaschen waren jeweils mit 135,6 bzw. 151,2 g Wasserstoffperoxidlösung (3 %) gefüllt. Die Analyse des Gesamtstickstoffgehalts ergab 22 bzw. 5 mg/kg in den Lösungen, was einer Menge von insgesamt 7,7 mg Stickstoff bzw. 16,6 mg NO entspricht, die aus den Salzschmelzen entwichen.

### Versuch gemäß Erfindung

In dem gleichen Versuchsaufbau wurden in einem zweiten Experiment 100 g HITEC® (7 g Na-NO₃, 53 g KNO₃, 40 g NaNO₂) mit 1 g Na₂CO₃ auf 600 °C erhitzt und 2,5 Stunden bei dieser Temperatur (± 5 K) gehalten. Die Schmelze wurde ebenfalls mit 10 l/h Argonüberströmt, um die gebildeten Gase in zwei Waschflaschen zu überführen. Die beiden Waschflaschen waren mit 148,2 und 149,4 g Wasserstoffperoxidlösung (3 %) gefüllt. Die Analyse des Gesamtstickstoffgehalts ergab 9 bzw. 7 mg/kg in den Lösungen, was einer Menge von insgesamt 4,8 mg Stickstoff bzw. 10,2 mg NO entspricht, die aus den Salzschmelzen entwichen.
Damit konnte gezeigt werden, dass 1 % Natriumcarbonat als Zusatz in HITEC®, die Freisetzung von Stickoxiden um ca. 40 Gew.-% verringert.

### Beispiel 5

### Vergleichsversuch ohne erfindungsgemäße Alkalimetallverbindungen B)

100 g Solar Salt (60 g NaNO₃, 40 g KNO₃) wurden innerhalb von 2 Stunden in einem Edelstahlrohr auf 600 °C erhitzt und 1 Stunde bei dieser Temperatur (± 5 K) gehalten. Die Schmelze wurde mit 5 l/h wasser- und kohlendioxidfreier Luft überströmt, um die entstehenden Abgase in einen Waschturm einzuleiten. Nach Versuchsende wurde die Apparatur für eine halbe Stunde mit Argon gespült. Der Waschturm war mit 57 g Waschlösung aus 0,1 mol/l KMnO₄ mit 0,2 mol/l NaOH in Wasser gefüllt. Die Analyse des Gesamtstickstoffgehalts ergab 51 mg/kg in der Lösung, was insgesamt einer Menge von 2,9 mg Stickstoff bzw. 6,2 mg NO entspricht, die aus den Salzschmelzen entwichen.

### Versuch gemäß Erfindung

In dem gleichen Versuchsaufbau wurden in einem zweiten Experiment 100 g Solar Salt mit 1 g Na₂CO₃ (entspricht 0,11 Masse-% Kohlenstoff) innerhalb von 2 Stunden in einem Edelstahlrohr auf 600 °C erhitzt und 1 Stunde bei dieser Temperatur (± 5 K) gehalten. Die Schmelze wurde mit 5 l/h wasser- und kohlendioxidfreier Luft überströmt, um die entstehenden Abgase in einen Waschturm einzuleiten. Nach Versuchsende wurde die Apparatur für eine halbe Stunde mit Argon gespült. Der Waschturm war mit 56 g Waschlösung aus 0,1 mol/l KMnO₄ mit 0,2 mol/l NaOH in Wasser gefüllt. Die Analyse des Gesamtstickstoffgehalts ergab 34 mg/kg in der Lösung, was insgesamt einer Menge von 1,9 mg Stickstoff bzw. 4,1 mg NO entspricht, die aus den Salzschmelzen entwichen.
Damit konnte gezeigt werden, dass 1 % Natriumcarbonat als Zusatz in Solar Salt, die Freisetzung von Stickoxiden um ca. 30 % verringert.

Die Beispiele 4 und 5 zeigen, dass die erfindungsgemäßen Alkalimetallverbindungen B) die Freisetzung von Stickstoffoxiden bei sehr hohen Temperaturen stark vermindern.

## Patentansprüche

1. Nitratsalzzusammensetzung, enthaltend als wesentliche Bestandteile
A) ein Alkalimetallnitrat und ein Alkalimetallnitrit in einer Gesamtmenge im Bereich von 98 bis 99,84 Gew.-% und,
B) eine Alkalimetallverbindung ausgewählt aus der Gruppe B1) Alkalimetalloxid, B2) Al-kalimetallcarbonat, B3) Alkalimetallverbindung, die im Temperaturbereich von 250°C bis 600°C zu Alkalimetalloxid oder Alkalimetallcarbonat zerfällt, B5) Alkalimetallperoxid Met₂O₂, in welchem Met Lithium, Natrium, Kalium, Rubidium, Cäsium bedeuten und B6) Alkalimetallsuperoxid MetO₂, in welchem Met Natrium, Kalium, Rubidium, Cäsium bedeuten in einer Gesamtmenge im Bereich von 0,16 bis 2 Gew.-%, jeweils bezogen auf die Nitratsalzzusammensetzung.

2. Nitratsalzzusammensetzung gemäß Anspruch 1, worin der Bestandteil B) ein Alkalimetallcarbonat ist.

3. Nitratsalzzusammensetzung, gemäß Anspruch 1 bis 2, wobei der Bestandteil B) in einer Menge im Bereich von 0,2 bis 2 Gew.-%, enthalten ist.

4. Nitratsalzzusammensetzung gemäß Anspruch 1 bis 3, wobei der Bestandteil A) ein Alkalimetallnitrit in einer Gesamtmenge bis 50 Gew.-%, bezogen auf den Bestandteil A), enthält.

5. Nitratsalzzusammensetzung gemäß Anspruch 1 bis 4, wobei die Alkalimetallnitratkomponente des Bestandteils A) sich zusammensetzt aus
A1) Kaliumnitrat in einer Menge im Bereich von 20 bis 55 Gew.-%,
A2) Natriumnitrat in einer Menge im Bereich von 45 bis 80 Gew.-%, jeweils bezogen auf die Alkalimetallnitratkomponente des Bestanteils A).

6. Nitratsalzzusammensetzung nach den Ansprüchen 1 bis 5, wobei das Alkalimetallcarbonat ausgewählt wird aus der Gruppe bestehend aus Natriumcarbonat Na₂CO₃ und Kaliumcarbonat K₂CO₃.

7. Nitratsalzzusammensetzung nach den Ansprüchen 1 bis 6, wobei das Alkalimetallcarbonat Natriumcarbonat Na₂CO₃ ist.

8. Nitratsalzzusammensetzung nach den Ansprüchen 1 bis 7 in geschmolzener Form.

9. Verwendung einer Nitratsalzzusammensetzung, wie in den Ansprüchen 1 bis 8 definiert, als Wärmeträgermedium und/oder Wärmespeichermedium.

10. Verwendung, nach Anspruch 9, wobei die Nitratsalzzusammensetzung in geschmolzener Form vorliegt.

11. Verwendung nach den Ansprüchen 9 bis 10 in Kraftwerken zur Erzeugung von Wärme und/oder Elektrizität, in der chemischen Verfahrenstechnik und in Metallhärteanlagen.

12. Verwendung nach Anspruch 11 in Solarthermiekraftwerken.

13. Verwendung nach Anspruch 12 als Wärmeträgermedium in Solarthermiekraftwerken.

14. Verwendung nach Anspruch 13 als Wärmespeichermedium in Solarthermiekraftwerken.

15. Verwendung nach Anspruch 11 als Wärmeträgermedium zur Beheizung von Reaktions-apparaturen chemischer Produktionsanlagen.

## Claims

1. A nitrate salt composition comprising as significant constituents
A) an alkali metal nitrate and an alkali metal nitrite in a total amount in the range from 98 to 99.84% by weight and
B) an alkali metal compound selected from the group B1) alkali metal oxide, B2) alkali metal carbonate, B3) alkali metal compound which decomposes into alkali metal oxide or alkali metal carbonate in the temperature range from 250°C to 600°C, B5) alkali metal peroxide Met₂O₂, in which Met is lithium, sodium, potassium, rubidium, cesium, and B6) alkali metal superoxide MetO₂, in which Met is sodium, potassium, rubidium, cesium, in a total amount in the range from 0.16 to 2% by weight, in each case based on the nitrate salt composition.

2. The nitrate salt composition according to claim 1, wherein the constituent B) is an alkali metal carbonate.

3. The nitrate salt composition according to claim 1 or 2, wherein the constituent B) is comprised in an amount in the range from 0.2 to 2% by weight.

4. The nitrate salt composition according to any of claims 1 to 3, wherein the constituent A) comprises an alkali metal nitrite in a total amount up to 50% by weight, based on the constituent A).

5. The nitrate salt composition according to any of claims 1 to 4, wherein the alkali metal nitrate component of the constituent A) is composed of
A1) potassium nitrate in an amount in the range from 20 to 55% by weight,
A2) sodium nitrate in an amount in the range from 45 to 80% by weight, in each case based on the alkali metal nitrate component of the constituent A).

6. The nitrate salt composition according to any of claims 1 to 5, wherein the alkali metal carbonate is selected from the group consisting of sodium carbonate Na₂CO₃ and potassium carbonate K₂CO₃.

7. The nitrate salt composition according to any of claims 1 to 6, wherein the alkali metal carbonate is sodium carbonate Na₂CO₃.

8. The nitrate salt composition according to any of claims 1 to 7 in molten form.

9. The use of a nitrate salt composition as defined in any of claims 1 to 8 as heat transfer medium and/or heat storage medium.

10. The use according to claim 9, wherein the nitrate salt composition is present in molten form.

11. The use according to claims 9 to 10 in power stations for generating heat and/or electricity, in chemical process engineering and in metal hardening plants.

12. The use according to claim 11 in solar thermal power stations.

13. The use according to claim 12 as heat transfer medium in solar thermal power stations.

14. The use according to claim 13 as heat storage medium in solar thermal power stations.

15. The use according to claim 11 as heat transfer medium for heating reaction apparatuses of chemical production plants.

## Revendications

1. Composition de sels nitrates, contenant en tant que constituants principaux
A) un nitrate d'un métal alcalin et un nitrite de métal alcalin en une quantité totale comprise dans la plage de 98 à 99,84 % en poids, et
B) un composé d'un métal alcalin, choisi dans le groupe B1) un oxyde d'un métal alcalin, B2) un carbonate d'un métal alcalin, B3) un composé de métaux alcalins qui se décompose dans la plage de températures de 250°C à 600°C pour donner un oxyde de métal alcalin ou un carbonate de métal alcalin, B5) un peroxyde de métal alcalin Met₂O₂ dans lequel Met représente le lithium, le sodium, le potassium, le rubidium, le césium, et B6) un peroxyde d'un métal alcalin MetO₂, dans lequel Met représente le sodium, le potassium, le rubidium, le césium, en une quantité totale comprise dans la plage de 0,16 à 2 % en poids, chacun par rapport à la composition de sels nitrates.

2. Composition de sels nitrates selon la revendication 1, dans laquelle le constituant B) est un carbonate d'un métal alcalin.

3. Composition de sels nitrates selon les revendications 1 à 2, dans laquelle le constituant B) est contenu en une quantité comprise dans la plage de 0,2 à 2 % en poids.

4. Composition de sels nitrates selon les revendications 1 à 3, dans laquelle le constituant A) contient un nitrite d'un métal alcalin en une quantité totale allant jusqu'à 50 % en poids par rapport au constituant A).

5. Composition de sels nitrates selon les revendications 1 à 4, dans laquelle le composant nitrate d'un métal alcalin du constituant A) est composé
A1) de nitrate de potassium en une quantité comprise dans la plage de 20 à 55 % en poids,
A2) de nitrate de sodium en une quantité comprise dans la plage de 45 à 80 % en poids, chacun par rapport au composant nitrate d'un métal alcalin du constituant A).

6. Composition de sels nitrates selon les revendications 1 à 5, dans laquelle le carbonate d'un métal alcalin est choisi dans le groupe consistant en le carbonate de sodium Na₂CO₃ et le carbonate de potassium K₂CO₃.

7. Composition de sels nitrates selon les revendications 1 à 6, dans laquelle le carbonate d'un métal alcalin est le carbonate de sodium Na₂CO₃.

8. Composition de sels nitrates selon les revendications 1 à 7, sous forme fondue.

9. Utilisation d'une composition de sels nitrates telle que définie dans les revendications 1 à 8 en tant que fluide caloporteur et/ou fluide accumulateur de chaleur.

10. Utilisation selon la revendication 9, pour laquelle la composition de sels nitrates se présente sous forme fondue.

11. Utilisation selon les revendications 9 à 10 dans des centrales pour la production de chaleur et/ou d'électricité, dans la technique des procédés chimiques et dans les installations de trempe de métaux.

12. Utilisation selon la revendication 11 dans des centrales thermiques solaires.

13. Utilisation selon la revendication 12 en tant que fluide caloporteur dans des centrales thermiques solaires.

14. Utilisation selon la revendication 13 en tant que fluide accumulateur de chaleur dans les centrales thermiques solaires.

15. Utilisation selon la revendication 11 en tant que fluide caloporteur pour le chauffage d'équipements de réaction d'installations de production chimiques.
